# EUROPÄISCHE PATENTSCHRIFT

(11) **EP 2 171 585 B1**
(45) Veröffentlichungstag und Bekanntmachung des Hinweises auf die Patenterteilung: **13.07.2016**
(21) Anmeldenummer: 08759778.7
(22) Anmeldetag: 20.05.2008
(51) Int. Cl.: G06F 11/07, G06F 11/16, B60T 8/88

(54) **VERFAHREN ZUM BETREIBEN EINES MIKROCONTROLLERS UND EINER AUSFÜHRUNGSEINHEIT SOWIE EIN MIKROCONTROLLER UND EINE AUSFÜHRUNGSEINHEIT**
METHOD FOR THE OPERATION OF A MICROCONTROLLER AND AN EXECUTION UNIT AND A MICROCONTROLLER AND AN EXECUTION UNIT
PROCÉDÉ D'EXPLOITATION D'UN MICROCONTRÔLEUR ET D'UNE UNITÉ D'EXÉCUTION, MICROCONTRÔLEUR ET UNITÉ D'EXÉCUTION CORRESPONDANTS

(30) Priorität: 25.06.2007 DE 102007029116
(43) Veröffentlichungstag der Anmeldung: 07.04.2010
(73) Patentinhaber: Continental Automotive GmbH, 30165 Hannover (DE)
(72) Erfinder: JIANG, Zheng-Yu, 93053 Regensburg (DE); GEIB, Horst, 55435 Gau-Algesheim (DE); SCHMID, Dietmar, 65606 Villmar (DE)
(86) Internationale Anmeldenummer: PCT/EP2008/056162
(87) Internationale Veröffentlichungsnummer: WO 2009/000602

(56) Entgegenhaltungen:
- EP-A- 0 322 141
- EP-A- 0 461 792
- EP-A- 0 496 509
- EP-A- 1 672 505
- WO-A-02/074596
- WO-A-2005/001690
- DE-A1- 4 220 247
- DE-A1-102005 059 021
- DE-A1-102005 061 403
- US-A- 5 029 071
- US-A- 5 548 601
- US-A- 5 594 646
- FARSI M ET AL: "An overview of controller area network" COMPUTING & CONTROL ENGINEERING JOURNAL IEE UK, Bd. 10, Nr. 3, Juni 1999 (1999-06), Seiten 113-120, XP002506028 ISSN: 0956-3385

## Beschreibung

Die Erfindung betrifft ein Verfahren zum Betreiben eines Mikrocontrollers und einer Ausführungseinheit, die miteinander koppelbar sind, sowie ein entsprechend ausgestalteter Mikrocontroller und eine Ausführungseinheit zur Durchführung des Verfahrens.

Bei sicherheitsrelevanten Sensorschaltungen für Kraftfahrzeuge, die mit einem Mikrocontroller ausgestattet sind, kann es durch eine fehlerhafte Abarbeitung des Programms im Mikrocontroller zu einer fehlerhaften Verarbeitung von Sensordaten und somit zur Übermittlung von fehlerhaften verarbeiteten Sensordaten kommen. Diese übermittelten fehlerhaften Sensordaten können beispielsweise in einem Bremssystem, wie ESP-oder ABS-Steuergerät, weiterverarbeitet werden und somit zu ungewollten Bremseingriffen führen, die mit großer Sicherheit vermieden werden müssen.

Aus der WO 2005/001690 A2 ist eine Überwachung des Programmlaufs in einem Mikrocomputer bekannt. Dabei wird zusätzlich zum Lauf des Programms im Mikrocomputer eine Kopie des Programms mit den für das Programm vorgesehenen Eingangsdaten oder Testdaten abgelaufen und die Ausgangsdaten der Kopie mit denen des Programms verglichen und bei Nichtübereinstimmung eine Fehlermeldung erzeugt. In diesem Zusammenhang offenbart das Dokument, dass nach dem Lauf des Programms und nach dem Lauf von Programmteilen jeweils ein Flag gesetzt oder geändert wird und dass eine Fehlermeldung erzeugt wird, wenn nicht alle Flags gesetzt oder geändert werden. Diese Überwachung kann als eine Programm-Ablauf-Überwachung angesehen werden. Desweiteren offenbart das Dokument die Überwachung des Programmlaufs in mindestens zwei miteinander verbundenen Mikrocomputern eines elektronischen Gerätes, insbesondere einer Sensorschaltung für Kraftfahrzeuge, wobei in einem Mikrocomputer eine Anfrage erzeugt wird, welche an den anderen Mikrocomputer gesendet wird und dort mit vorgegebenen Eingangsdaten den Lauf eines Programms bewirkt, dass eine von den Ausgangsdaten abhängige Antwort an den einen Mikrocomputer zurückgesendet wird und dass in einem Mikrocomputer die Anforderung und die Antwort miteinander verglichen werden. Diese Überwachung kann als eine Anfrage-Antwort-Überwachung angesehen werden.

Die DE 10 2005 059 021 A1 offenbart ein Verfahren zum Betreiben von über ein Datenkommunikationsnetzwerk verküpften eingebetteten Systemen, insbesondere in einem Kraftfahrzeug, bei dem von einem der eingebetteten Systeme zu einem weiteren der eingebetteten Systeme zyklisch mindestens ein Signal als Nutzdaten in einem Rahmen, der als Nutzdatenrahmen bezeichnet wird, übertragen wird, wobei von dem einen der eingebetteten Systeme ein Konfidenzwert für das mindestens eine Signal ermittelt wird und bei einer Änderung des Konfidenzwerts des mindestens einen Signals über eine vorgegebene Änderungsschwelle mindestens ein zu dem mindestens einen Signal zugeordnetes Diagnosesignal als Diagnosedaten in einem Rahmen, der als Diagnosedatenrahmen bezeichnet wird, zumindest zu dem mindestens einen weiteren eingebetteten System übertragen wird, wobei das Diagnosesignal eine Konfidenzwertinformation für das mindestens eine Signal umfasst. die Konfidenzermittlungseinheit aus dieser Druckschrift eignet sich zwar dazu eine Aussage über eine Signalqualität zu treffen. Es ist nicht dafür geeignet, um eine Aussage über einen korrekten Ablauf eines Programms zu treffen.

Die Aufgabe, die der Erfindung zugrunde liegt, ist ein Verfahren zum Betreiben eines Mikrocontrollers und einer Ausführungseinheit, das einfach und kostengünstig ist, sowie einen entsprechend ausgestalteten Mikrocontroller und eine Ausführungseinheit zur Durchführung des Verfahrens zu schaffen

Die Aufgabe wird gelöst durch die Merkmale der unabhängigen Patentansprüche. Vorteilhafte Ausgestaltungen der Erfindung sind in den Unteransprüchen gekennzeichnet.

Durch den Prüfcode, der abhängig von der Abarbeitung des Programms im Mikrocontroller erzeugt wird, kann in einfacher Weise die Abarbeitung des Programms einer vom Mikrocontroller unabhängigen Einheit, insbesondere der Ausführungseinheit, angezeigt werden. Die Ausführungseinheit ist besonders geeignet den Prüfcode zu empfangen, weil die Ausführungseinheit beispielsweise im Kraftfahrzeug in Form eines Steuergerätes vorhanden ist. Durch einen nichtnotwendigen zweiten Mikrocontroller zur Überwachung des Mikrocontrollers kann das Verfahren besonders kostengünstig implementiert werden.

Gemäß einer vorteilhaften Ausgestaltung umfasst die Nachricht den Prüfcode. Somit umfasst die zur Ausführungseinheit übermittelte Nachricht neben den im Mikrocontroller verarbeiteten Sensordaten auch den Prüfcode, wodurch sich die Übermittlung des Prüfcodes besonders kostengünstig implementieren lässt.

Mittels der dem Mikrocontroller zugeordneten Überwachungseinheit wird die korrekte Abarbeitung des Programms im Mikrocontroller überwacht und sichergestellt, so dass durch eine fehlerhafte Abarbeitung des Programms erzeugte Daten mittels des Prüfcodes als fehlerhaft gekennzeichnet werden. Dabei kann die Überwachungseinheit als zusätzliches Programmteil im Programm des Mikrocontrollers integriert sein oder als ein Hard-ware-Funktionsmodul im Mikrocontroller integriert sein.

Eine weitere vorteilhafte Ausgestaltung zeichnet sich aus durch ein Verfahren, bei dem die Abarbeitung der Überwachungseinheit überwacht wird und nur bei einem positiven Ergebnis der Überwachung ein fehlerfreier Prüfcode erzeugt. Zur Überwachung der Abarbeitung des Programms durch die Überwachungseinheit wird zusätzlich die Überwachungseinheit überwacht, so dass aus einer fehlerbehafteten Abarbeitung des Programms oder aus einer übersehen fehlerbehafteten Abarbeitung des Programms aufgrund einer fehlerbehafteten Abarbeitung der Überwachungseinheit erzeugte Sensordaten als ungültig mittels Prüfcode gekennzeichnet werden.

Gemäß einer weiteren vorteilhaften Ausgestaltung wird der Prüfcode bei einer fehlerfreien Abarbeitung des Programms logisch vordefiniert erzeugt und bei einer fehlerbehafteten Abarbeitung nicht logisch vordefiniert erzeugt. Ein logisch vordefinierter Prüfcode wird beispielsweise dadurch erzeugt, dass abhängig von zuvor übermittelten Werten des Prüfcodes zukünftige Werte des Prüfcodes bestimmt werden. Dadurch ermöglicht der logisch vordefinierte Prüfcode besonders geeignet eine Vorhersage des zu empfangenen Prüfcodes in der Ausführungseinheit und somit die Kennzeichnung einer fehlerfreien Abarbeitung des Programms, während ein nicht logisch vordefinierter Prüfcode nicht mit der Vorhersage in der Ausführungseinheit übereinstimmt und somit eine fehlerbehaftete Abarbeitung des Programms kennzeichnet und die übermittelte Nachricht als ungültig kennzeichnet.

Gemäß einer weiteren vorteilhaften Ausgestaltung wird der Prüfcode mittels eines Vorwärts- und/oder Rückwärtszählers logisch vordefiniert erzeugt. Diese Ausgestaltung ermöglicht eine besonders einfache Vorhersage des zu empfangenen Prüfcodes bei einer fehlerfreien Abarbeitung des Programms und eine besonders einfache programmtechnische und hardwaretechnische Implementierung. Alternativ zum Vorwärts- und/oder Rückwärtszählen, kann beispielsweise bei einem fehlerbehafteten Prüften Prüfcode der Wert des Prüfcodes der zuvor übermittelten Nachricht vorgegeben werden, so dass es in diesem Fall zu keiner Änderung des Werts des Prüfcode mittels dem Vorwärts und/oder Rückwärtszählens kommt. Ferner kann bei einem fehlerbehafteten Prüfcode auch ein fester Wert vorgegeben werden, so z.B. ein Wert von 0.

Die Aufgabe wird ferner gelöst gemäß einem Verfahren nach Anspruch 7. Dadurch kann eine fehlerbehaftete Abarbeitung des Programms, beispielsweise ein sogenanntes Hängen des Programms und eine damit verbundene fehlende oder zeitlich verschobene Übermittlung der Nachricht erkannt und gekennzeichnet werden.

Gemäß einer weiteren vorteilhaften Ausgestaltung umfasst der Mikrocontroller eine Hardware-Überwachungseinheit, die durch die Überwachungseinheit zu vorbestimmten Zeitpunkten angesteuert wird, wobei bei einem Unter- oder Überschreiten des vorbestimmten Zeitpunktes der Mikrocontroller durch die Hardware-Überwachungseinheit zurücksetzt wird. Dadurch kann eine fehlerbehaftete Abarbeitung des Programms und/oder der Überwachungseinheit, beispielsweise das sogenannte Hängen des Programms und/oder der Überwachungseinheit durch die fehlende Ansteuerung der Hardware-Überwachungseinheit besonders sicher erkannt werden und durch das dadurch resultierende Zurücksetzen des Mikrocontrollers die Abarbeitung des Programms neu gestartet werden.

Desweiteren zeichnet sich die Erfindung aus durch ein Verfahren zum Betreiben einer Ausführungseinheit, die mit einem Mikrocontroller gemäß den dargestellten Ausgestaltungen koppelbar ist, bei dem überprüft wird, ob der Prüfcode logisch vordefiniert ist und/oder der Prüfcode innerhalb des vorbestimmten Zeitintervalls empfangen wurde, wobei bei einem positiven Ergebnis der Überprüfung die Nachricht als gültig gekennzeichnet wird und bei einem negativen Ergebnis die Nachricht als ungültig gekennzeichnet wird. Die Ausführungseinheit ist besonders geeignet den Prüfcode zu empfangen, weil diese meistens vorhanden ist, so beispielsweise in Kraftfahrzeugen in denen Sensorschaltungen mit Steuergeräten, die als eine Art von Ausführungseinheit betrachtet werden kann, gekoppelt sind und unabhängig von dem Mikrocontroller in der Sensorschaltung arbeitet. In der Ausführungseinheit wird überprüft, ob der empfangene Prüfcode vom Mikrocontroller logisch vordefiniert ist und/oder innerhalb des vorbestimmten Zeitintervalls empfangen wurde. Die dem Prüfcode zugeordnete Nachricht wird entsprechend dem Ergebnis der Überprüfung als gültig oder ungültig gekennzeichnet. Ungültig gekennzeichnete Nachrichten können in der Ausführungseinheit beispielsweise ignoriert werden und/oder mittels einer weiteren Nachricht kann die Ausführungseinheit dem Mikrocontroller mitteilen, dass fehlerbehaftete Nachrichten empfangen wurden.

Eine weitere vorteilhafte Ausgestaltung zeichnet sich aus durch einen Mikrocontroller, der mit einer Ausführungseinheit koppelbar ist und dazu ausgebildet ist, abhängig von Eingangsdaten mittels eines Programms im Mikrocontroller eine Nachricht für die Ausführungseinheit zu erzeugen und zu übermitteln. Ferner ist der Mikrocontroller dazu ausgebildet, neben der Nachricht ein Prüfcode in Abhängigkeit von der Abarbeitung des Programms zu erzeugen und vom Mikrocontroller zur Ausführungseinheit zu übermitteln. Durch die Ausbildung des Mikrocontrollers zur Erzeugung des Prüfcodes kann dieser besonders vorteilhaft und besonders schnell erzeugt werden, ohne zeitkritische Auswirkungen auf die Abarbeitung des Programms zu haben. Ferner ist die Erzeugung des Prüfcodes im Mikrocontroller besonders einfach umzusetzen, wenn beispielsweise der Prüfcode mittels eines Vorwärts- und/oder Rückwärtszählers logisch vordefiniert wird.

Gemäß einer weiteren vorteilhaften Ausgestaltung umfasst der Mikrocontroller eine Überwachungseinheit, die dazu ausgebildet ist, die Abarbeitung des Programms zu überwachen und den Prüfcode zu erzeugen. Die Überwachungseinheit ermöglicht eine besonders schnelle Überwachung der Abarbeitung des Programms und eine besonders schnelle Erzeugung des Prüfcode, ohne zeitkritische Auswirkungen auf die Abarbeitung des Programms zu haben.

Gemäß einer weiteren vorteilhaften Ausgestaltung umfasst der Mikrocontroller eine weitere Überwachungseinheit, die dazu ausgebildet ist, die Überwachungseinheit zu überwachen und nur bei einem positiven Ergebnis der Überwachung einen fehlerfreien Prüfcode zu erzeugen. Die weitere Überwachungseinheit zur Überwachung der Überwachungseinheit, die die Abarbeitung des Programms überwacht, erhöht besonders die Fähigkeit, eine fehlerbehaftete Abarbeitung des Programms und zusätzlich eine fehlerbehaftete Abarbeitung der Überwachungseinheit zu erkennen und mittels Prüfcodes der Ausführungseinheit anzuzeigen. Dadurch wird die Verarbeitung fehlerbehaftete verarbeitete Sensordaten vermieden und beispielsweise im Falle eines Bremssystems im Kraftfahrzeug ein ungewollter Bremseingriff besonders sicher vermieden.

Eine weitere vorteilhafte Ausgestaltung zeichnet sich aus durch eine Ausführungseinheit, die mit einem Mikrocontroller gemäß der dargestellten Ausgestaltungen koppelbar ist und eine Auswerteeinheit umfasst, die dazu ausgebildet ist, zu überprüfen, ob der Prüfcode logisch vordefiniert ist und/oder der Prüfcode innerhalb des vorbestimmten Zeitintervalls empfangen wurde, wobei die Auswerteeinheit bei einem positiven Ergebnis der Überprüfung die Nachricht als gültig kennzeichnet und bei einem negativen Ergebnis die Nachricht als ungültig kennzeichnet. Die Auswerteeinheit ermöglicht dabei besonders einfach und schnell, den Prüfcode daraufhin zu überprüfen, ob er logisch vordefiniert ist und/oder innerhalb des vorbestimmten Zeitintervalls empfangen wurde. Dabei kann die Auswerteeinheit einen fehlerfreien und/oder fehlerbehafteten Prüfcode beispielsweise mittels Flags und/oder mittels mindestens einer Interruptauslösung als gültig und/oder ungültig kennzeichnen. Die mittels Flags als fehlerbehaftet gekennzeichneten Nachrichten können beispielsweise ignoriert werden.

In einer weiteren Ausgestaltung zeichnet sich die Erfindung aus durch ein System, dass einen Mikrocontroller gemäß der dargestellten Ausgestaltungen und einer mit dem Mikrocontroller gekoppelten Ausführungseinheit gemäß der dargestellten Ausgestaltung umfasst. Dadurch ergibt sich ein besonders geeignetes System zur Überwachung der Abarbeitung des Programms im Mikrocontroller, welches einfach und kostengünstig realisierbar ist.

Ausführungsbeispiele der Erfindung sind im Folgenden anhand der schematischen Zeichnungen näher erläutert. Es zeigen:
- Figur 1: eine schematische Darstellung eines Systems mit Mikrocontroller und Ausführungseinheit,
- Figur 2: eine weitere schematische Darstellung des Systems mit Mikrocontroller und Ausführungseinheit,
- Figur 3: eine weitere schematische Darstellung des Systems mit Mikrocontroller und Ausführungseinheit,
- Figur 4: ein Ablaufdiagramm einer Überwachung einer Abarbeitung eines Programms,
- Figur 5: einen zeitlichen Verlauf eines Prüfcodes,
- Figur 6: ein Ablaufdiagramm einer Erzeugung eines Prüfcodes.

Elemente gleicher Konstruktion oder Funktion sind figurenübergreifend mit den gleichen Bezugszeichen gekennzeichnet.

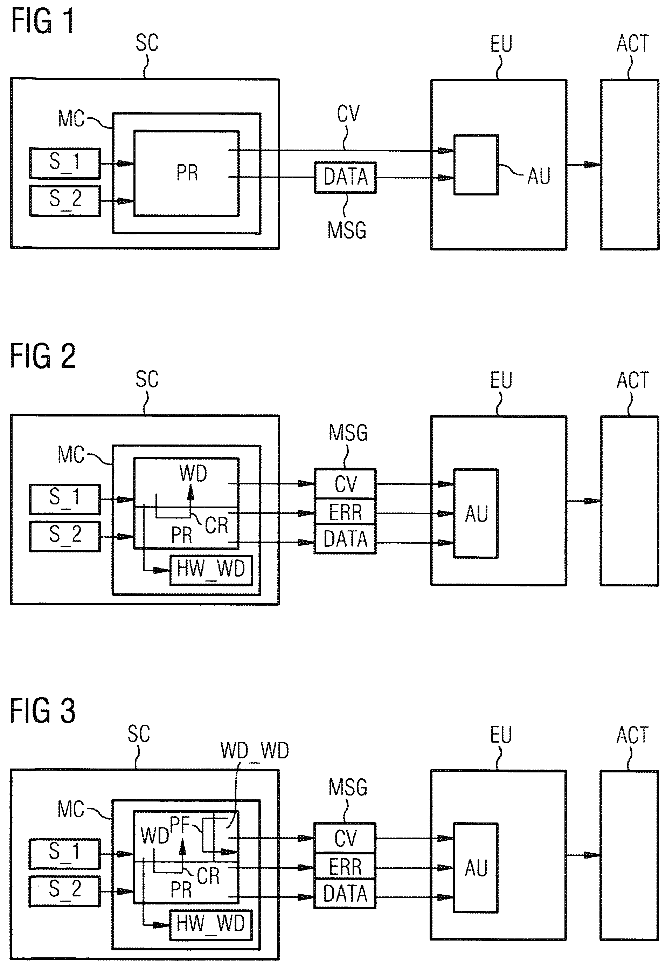

Eine Sensorschaltung SC (Figur 1) umfasst einen Mikrocontroller MC, der Sensordaten S_1 und S_2, die beispielsweise den Daten eines Querbeschleunigungssensors und eines Drehratesensors in einem Kraftfahrzeug entsprechen, empfängt und mittels eines Programms PR verarbeitet. Die verarbeiteten Sensordaten DATA werden mittels einer Nachricht MSG zu einer von dem Mikrocontroller MC unabhängigen Ausführungseinheit EU übermittelt. Die Ausführungseinheit EU kann beispielsweise als ein ESP-Steuergerät ausgebildet sein, das die empfangenen Sensordaten weiterverarbeitet und abhängig von diesen Bremsen des Kraftfahrzeugs mittels Bremsaktuatoren ACT ansteuert. Die Ausführungseinheit EU umfasst zusätzlich eine Auswerteeinheit AU. Neben der Nachricht MSG wird ein Prüfcode CV abhängig von der Abarbeitung des Programms PR durch das Programm PR selbst erzeugt und an die der Ausführungseinheit EU zugeordnete Auswerteeinheit AU übermittelt. Der Prüfcode CV kennzeichnet dabei die in der dazu parallel übermittelte Nachricht MSG enthaltenen Daten DATA als gültig oder ungültig abhängig von der Abarbeitung des Programms PR im Mikrocontroller MC. Eine fehlerfreie Abarbeitung und die Erzeugung fehlerfreier Daten DATA, wird mittels eines fehlerfreien Prüfcodes CV der Ausführungseinheit EU angezeigt, während fehlerbehaftete Daten DATA in der Nachricht MSG mittels eines fehlerbehafteten Prüfcodes CV der Ausführungseinheit EU angezeigt werden.

In einem weiteren Ausführungsbeispiel (Figur 2) umfasst der Mikrocontroller MC neben dem Programm PR auch eine Überwachungseinheit WD und eine Hardware-Überwachungseinheit HW_WD. Die Überwachungseinheit WD kann innerhalb des Mikrocontrollers MC im Programm PR als zusätzliches Programmteil oder als Hardware-Funktionsmodul integriert sein. Die Überwachungseinheit WD überwacht das Programm PR im Mikrocontroller MC beispielsweise im Sinne einer Anfrage-Antwort-Überwachung CR, wobei die Überwachungseinheit WD eine Anfrage erzeugt und an das Programm PR übermittelt. Anhand von der Anfrage zugeordneten Eingangsdaten wird das Programm PR abgearbeitet und die aus der Abarbeitung des Programms PR resultierenden Ausgangsdaten einer Antwort zugeordnet, die zurück an die Überwachungseinheit WD übermittelt wird und dort mit einer vorgegebenen Antwort verglichen wird. Bei Nichtübereinstimmung der Antworten kann beispielsweise der Prüfcode CV durch die Überwachungseinheit WD so erzeugt werden, dass der der Ausführungseinheit EU zugeordneten Auswerteeinheit AU eine fehlerbehaftete Abarbeitung des Programms PR angezeigt wird und die Auswerteeinheit AU die mittels der Nachricht MSG empfangenen verarbeiteten Sensordaten DATA ignoriert. Die Nachricht MSG in diesem Ausführungsbeispiel umfasst neben den verarbeiteten Sensordaten DATA auch den Prüfcode CV. Die Nachricht MSG kann im Fall eines Kraftfahrzeugs beispielsweise einer ControllerArea-Network-Nachricht (CAN) entsprechen.

In diesem Zusammenhang sei darauf hingewiesen, dass die Nachricht MSG zusätzlich einen Fehlercode ERR umfasst, der interne Störungen und Fehler der Sensorschaltung SC, wie beispielsweise Spannungsschwankungen, der Ausführungseinheit EU anzeigt. Die Ausführungseinheit EU kann anhand der mittels Fehlercode ERR angezeigten Störungen und Fehler die Nachricht als gültig und/oder ungültig kennzeichnen.

Die dem Mikrocontroller MC zugeordnete Hardware-Überwachungseinheit HW_WD wird durch die Überwachungseinheit WD zu vorbestimmten Zeitpunkten angesteuert, wobei bei fehlender Ansteuerung oder Unter- oder Überschreiten der vorbestimmten Zeitpunkte, der Mikrocontroller MC mittels der Hardware-Überwachungseinheit HW_WD zurückgesetzt wird und die Abarbeitung des Programms PR neu gestartet wird.

In Figur 3 umfasst der Mikrocontroller MC in der Sensorschaltung SC neben der Überwachungseinheit WD eine weitere Überwachungseinheit WD_WD, die die Abarbeitung der Überwachungseinheit WD überwacht. Die weitere Überwachungseinheit WD_WD kann im Programm PR als zusätzlicher Programmteil des Mikrocontrollers MC oder als weiteres Funktionsmodul im Mikrocontroller integriert sein. Die weitere Überwachungseinheit WD_WD kann beispielsweise im Sinne einer Programm-Ablauf-Überwachung PF ausgebildet sein, so dass während der Abarbeitung der Überwachungseinheit WD Flags gesetzt oder geändert werden. Die weitere Überwachungseinheit WD_WD erkennt eine fehlerbehaftete Abarbeitung der Überwachungseinheit WD mittels der Flags beispielsweise dadurch, dass nicht alle Flags gesetzt oder geändert werden. Mittels des der Nachricht MSG zugeordneten Prüfcodes CV kann die fehlerhafte Abarbeitung der Überwachungseinheit WD der der Ausführungseinheit EU zugeordneten Auswerteeinheit AU mitgeteilt und die mittels Nachricht MSG empfangenen verarbeiteten Sensordaten DATA ignoriert werden.

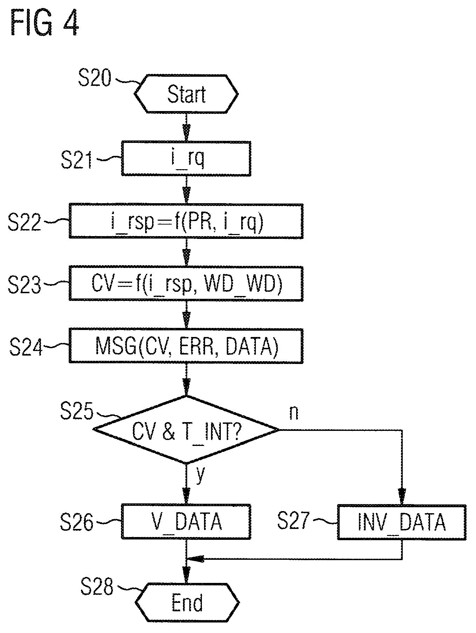

In Figur 4 wird anhand eines Ablaufdiagramms ein Programm in einem Schritt S20 gestartet. In einem Schritt S21 übermittelt beispielsweise die Überwachungseinheit WD im Sinne einer Anfrage-Antwort-Überwachung CR ein Anforderungsindex i_rq an das Programm PR. Anhand von dem Anforderungsindex i_rq zugeordneten Eingangsdaten wird das Programm PR abgearbeitet und Ausgangsdaten erzeugt. In Abhängigkeit von den erzeugten Ausgangsdaten wird im Schritt S22 ein Antwortindex i_rsp erzeugt, das zurück zur Überwachungseinheit WD übermittelt wird und mit einem vorgegebenen Antwortindex verglichen wird. In Abhängigkeit von dem Vergleich und dem Ergebnis der Überwachung der Abarbeitung der Überwachungseinheit WD durch die weitere Überwachungseinheit WD_WD, wird in einem Schritt S23 der Prüfcode CV erzeugt, der bei einer fehlerfreien Abarbeitung des Programms logisch vordefiniert ist und bei einer fehlerbehafteten Abarbeitung des Programms nicht logisch vordefiniert ist. Der Prüfcode CV wird in einem Schritt S24 der Nachricht MSG zugeordnet und neben den verarbeiteten Sensordaten DATA und dem Fehlercode ERR an die Ausführungseinheit EU übermittelt. In der Ausführungseinheit EU wird in einem Schritt S25 der empfangene Prüfcode CV daraufhin überprüft, ob er logisch vordefiniert ist und/oder innerhalb des vorbestimmten Zeitintervalls T_INT übermittelt und/oder empfangen wurde. Ist der Prüfcode CV logisch vordefiniert und/oder innerhalb des vorbestimmten Zeitintervalls übermittelt worden, werden die verarbeiteten Sensordaten DATA in einem Schritt S26 als gültige Sensordaten V_DATA gekennzeichnet. Diese können in der Ausführungseinheit EU weiterverarbeitet werden. Ist der Prüfcode CV nicht logisch vordefiniert und/oder wurde der Prüfcode CV außerhalb des vorbestimmten Zeitintervalls übermittelt und/oder empfangen, werden die verarbeiteten Sensordaten DATA in einem Schritt S27 als ungültige Sensordaten INV_DATA gekennzeichnet und können beispielsweise ignoriert werden.

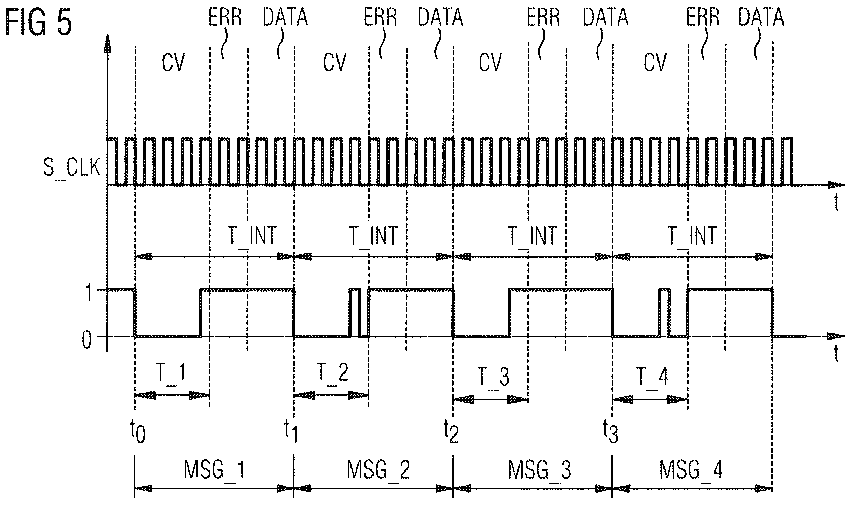

Figur 5 zeigt den zeitlichen Verlauf der Nachricht MSG, wobei die Nachricht MSG den Prüfcode CV, den Fehlercode ERR und die verarbeiteten Sensordaten DATA umfasst. In Figur 5 wird mit dem Taktsignal S_CLK ein Referenzsignal dargestellt, welches zur Vereinfachung der Beschreibung des Nachrichtenverlaufs MSG heranzuziehen ist und als Darstellung einer Bitzeit angesehen werden kann. Der Fehlercode ERR und die verarbeiteten Sensordaten DATA der Nachrichten MSG_1, MSG_2, MSG_3 und MSG_4 sind in Figur 5 beispielhaft dargestellt. Zu einem Zeitpunkt t0 wird die erste Nachricht MSG_1 zur Ausführungseinheit EU übermittelt. Sie enthält den Prüfcode CV, den Fehlercode ERR und die verarbeiteten Sensordaten DATA. Der Prüfcode CV umfasst eine erste Zeitdauer T_1, welche 8 Bitzeiten entspricht. Die erste Nachricht MSG_1 umfasst den Prüfcode CV mit dem Wert 1, der binär innerhalb der Zeitdauer T_1 dargestellt ist. Die zweite Nachricht MSG_2 wird zu einem Zeitpunkt t1 übermittelt. Die zweite Nachricht MSG_2 umfasst neben dem beispielhaft dargestellten Fehlercode ERR und den beispielhaft dargestellten verarbeiteten Sensordaten DATA den Prüfcode CV mit dem Wert 2, der binär innerhalb der Zeitdauer T_2 dargestellt ist. Die dritte und vierte Nachricht MSG_3 und MSG_4 werden entsprechend zu den Zeitpunkten t3 und t4 übermittelt und enthalten jeweils den Prüfcode CV mit dem Wert 3 und 4, die in beiden Nachrichten MSG_3 und MSG_4 binär in der Zeitdauer T_3 und T_4 dargestellt sind. Die Werte des Prüfcodes CV in den dargestellten Nachrichten MSG_1, MSG_2, MSG_3 und MSG_4 werden im Sinne eines Aufwärtszähler übermittelt, wobei bei einem 8 Bitzeiten umfassenden Prüfcode CV bis zu einem maximalen Wert von 255 inkrementiert werden kann und nach einem Zählerüberlauf wieder bei 1 beginnt. Ein Wert 0 für den Prüfcode CV kann beispielsweise für die Kennzeichnung einer fehlerbehafteten Abarbeitung des Programms PR vom Mikrocontroller MC zur Ausführungseinheit EU reserviert werden. Das vorbestimmte Zeitintervall T_INT ist in Figur 5 beispielsweise als eine Zeitdauer einer Übermittlungszeit einer Nachricht MSG dargestellt, innerhalb dessen eine Nachricht MSG übermittelt werden sollte.

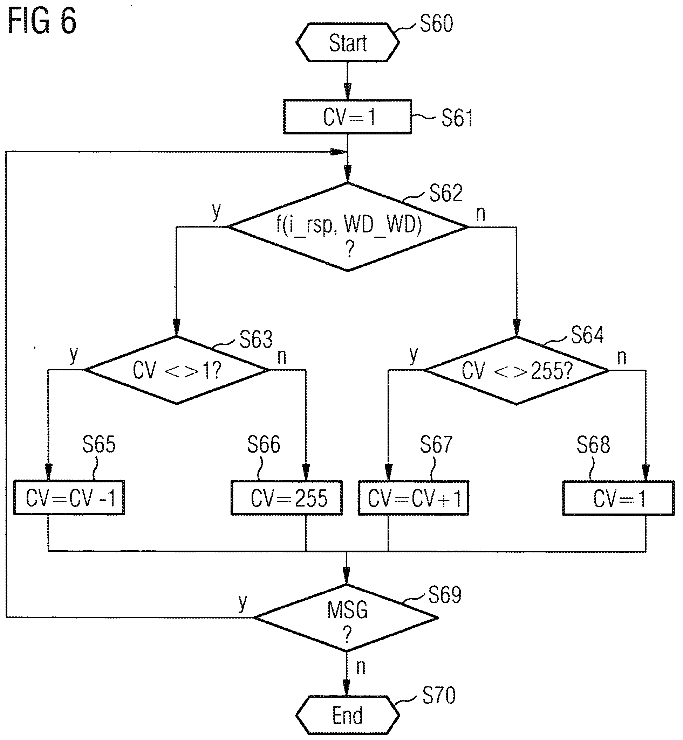

In Figur 6 wird in einem Schritt S60 die Erzeugung des fehlerfreien und/oder fehlerbehafteten Prüfcodes CV, wie sie beispielsweise in der weiteren Überwachungseinheit WD_WD abgearbeitet wird, gestartet. Der Beschreibung der Figur 6 wird beispielsweise ein 8-Bit Wert des Prüfcodes CV zu Grunde gelegt, der maximal bis zu einem Wert von 255 inkrementiert werden kann. In einem Schritt S61 wird dem Prüfcode CV eine eins vorgegeben. In einem Schritt S62 wird überprüft, ob ein fehlerfreier oder fehlerbehafteter Prüfcode CV erzeugt werden soll. Die Überprüfung kann anhand des in Figur 4 dargestellten Vergleichs des Anwortindex i_rsp mit einem vorgegebenen Antwortindex und anhand des Ergebnisses der Überwachung der Überwachungseinheit WD durch die weitere Überwachungseinheit WD_WD erfolgen. Wird anhand der Überprüfung entschieden, dass ein fehlerbehafteter Prüfcode CV erzeugt werden soll, wird zunächst in einem Schritt S63 überprüft, welchen Wert der aktuelle Prüfcode CV hat. Ist der Wert des Prüfcodes CV ungleich eins, wird in einem Schritt S65 der aktuelle Wert des Prüfcodes CV um eins dekrementiert. Ist der Wert des Prüfcodes CV in Schritt S63 gleich eins, wird in einem Schritt S66 dem Prüfcode CV ein Wert 255 vorgegeben. Alternativ zu den Schritten S63, S65 und S66 kann dem fehlerbehafteten Prüfcode CV ein unveränderter Wert des Prüfcodes CV vorgegeben werden, der beispielsweise mit dem Wert des Prüfcodes CV einer vorherigen Übermittlung der Nachricht MSG übereinstimmt. Mittels der Erzeugung des unveränderten Werts des Prüfcodes CV kann im Fall des sogenannten Hängens der Abarbeitung des Programms PR der Ausführungseinheit EU angezeigt werden, dass die Abarbeitung des Programms PR stoppt und die verarbeiteten Sensordaten DATA fehlerbehaftet sein könnten.

Ergibt die Überprüfung in Schritt S62 eine Erzeugung eines fehlerfreien Prüfcodes CV, wird in einem Schritt S64 zunächst überprüft, ob der Wert des Prüfcodes CV ungleich 255 ist. Ist dies der Fall wird in einem Schritt S67 der Wert des Prüfcodes CV um eins inkrementiert. Ist im Schritt S64 der Wert des Prüfcodes CV gleich 255 wird in einem Schritt S68 der Wert des Prüfcodes CV mit eins vorgegeben. Die Übermittlung des hier erzeugten Prüfcodes CV könnte beispielsweise mittels der dargestellten Übermittlung in Figur 5 erfolgen.

In einem Schritt S69 wird überprüft, ob weitere Nachrichten MSG übermittelt werden sollen und somit weitere Prüfcodes CV abhängig von den bereits übermittelten Prüfcodes CV erzeugt werden sollen. Sollen keine weiteren Nachrichten MSG übermittelt werden, wird die Erzeugung des Prüfcodes CV in einem Schritt S70 beendet.

## Patentansprüche

1. Verfahren zum Betreiben eines Mikrocontrollers (MC) einer Sensorschaltung, der mit einer Ausführungseinheit (EU) koppelbar ist, umfassend die Schritte:
- Empfangen von Eingangsdaten (S_1, S_2) mittels eines Programms (PR) im Mikrocontrollers (MC),
- Erzeugen und übermitteln einer Nachricht (MSG) für die Ausführungseinheit (EU) in Abhängigkeit der Eingangsdaten (S_1, S_2),
- Erzeugen eines Prüfcodes (CV) mittels einer Überwachungseinheit (WD) in Abhängigkeit von der Abarbeitung des Programms (PR) im Mikrocontroller (MC) neben der Nachricht (MSG), und
- Übermitteln des Prüfcodes (CV) vom Mikrocontroller (MC) zur Ausführungseinheit (EU)
**dadurch gekennzeichnet, dass** der Mikrocontroller (MC) die Überwachungseinheit (WD) umfasst und die Abarbeitung des Programms (PR) im Sinne einer Anfrage-Antwort-Überwachung (CR) durch die Überwachungseinheit (WD) überwacht wird,
wobei anhand von der Anfrage zugeordneten Eingangsdaten das Programm (PR) abgearbeitet wird und die aus der Abarbeitung des Programms (PR) resultierenden Ausgangsdaten einer Antwort zugeordnet werden, die zurück an die Überwachungseinheit (WD) übermittelt wird und dort mit einer vorgegebenen Antwort verglichen wird, wobei bei Nichtübereinstimmung der Antworten der Prüfcode (CV) durch die Überwachungseinheit (WD) so erzeugt wird, dass einer der Ausführungseinheit (EU) zugeordneten Auswerteeinheit (AU) eine fehlerbehaftete Abarbeitung des Programms (PR) angezeigt wird.

2. Verfahren nach Anspruch 1, wobei die Auswerteeinheit (AU) die mittels der Nachricht (MSG) empfangenen verarbeiteten Eingangsdaten (S_1, S_2) ignoriert, wenn eine fehlerbehaftete Abarbeitung des Programms (PR) angezeigt wird.

3. Verfahren nach einem der vorstehenden Ansprüche, bei dem die Nachricht (MSG) den Prüfcode (CV) umfasst.

4. Verfahren nach einem der vorstehenden Ansprüche, bei dem eine Abarbeitung der Überwachungseinheit (WD) überwacht wird und nur bei einem positiven Ergebnis der Überwachung ein fehlerfreier Prüfcode (CV) erzeugt wird.

5. Verfahren nach einem der vorstehenden Ansprüche, bei dem der Prüfcode (CV) bei einer fehlerfreien Abarbeitung des Programms (PR) logisch vordefiniert erzeugt wird und bei einer fehlerbehafteten Abarbeitung nicht logisch vordefiniert erzeugt wird.

6. Verfahren nach Anspruch 4, bei dem der Prüfcode (CV) mittels eines Vorwärts- und/oder Rückwärtszählers logisch vordefiniert erzeugt wird.

7. Verfahren nach Anspruch 1 wobei der Prüfcode (CV) in einem vorbestimmten Zeitintervall (T_INT) übermittelt wird.

8. Verfahren nach einem der vorstehenden Ansprüche, bei dem der Mikrocontroller (MC) eine Hardware-Überwachungseinheit (HW_WD) umfasst und diese durch die Überwachungseinheit (WD) zu vorbestimmten Zeitpunkten angesteuert wird, wobei bei einem Unter- oder Überschreiten des vorbestimmten Zeitpunktes der Mikrocontroller (MC) durch die Hardware-Überwachungseinheit (HW_WD) zurücksetzt wird.

9. Verfahren zum Betreiben einer Ausführungseinheit (EU), die mit einem gemäß Anspruch 7 oder 8 betriebenen Mikrocontroller (MC) koppelbar ist, bei dem überprüft wird, ob der Prüfcode (CV) logisch vordefiniert ist und/oder der Prüfcode (CV) innerhalb des vorbestimmten Zeitintervalls (T_INT) empfangen wurde, wobei bei einem positiven Ergebnis der Überprüfung die Nachricht (MSG) als gültig gekennzeichnet wird und bei einem negativen Ergebnis die Nachricht (MSG) als ungültig gekennzeichnet wird.

10. Sensorschaltung (SC) mit einem Mikrocontroller (MC), der mit einer Ausführungseinheit (EU) koppelbar ist und dazu ausgebildet ist,
- abhängig von Eingangsdaten (S_1, S_2) mittels eines Programms (PR) im Mikrocontroller (MC) eine Nachricht (MSG) für die Ausführungseinheit (EU) zu erzeugen und zu übermitteln,
- neben der Nachricht (MSG) ein Prüfcode (CV) in Abhängigkeit von der Abarbeitung des Programms (PR) zu erzeugen und vom Mikrocontroller (MC) zur Ausführungseinheit (EU) zu übermitteln,
**dadurch gekennzeichnet, dass** der Prüfcode (CV) in einem vorbestimmten Zeitintervall (T_INT) übermittelt wird und der Mikrocontroller (MC) eine Überwachungseinheit (WD) umfasst und die Abarbeitung des Programms (PR) durch die Überwachungseinheit (WD) im Sinne einer Anfrage-AntwortÜberwachung (CR) überwachbar ist, wobei anhand von der Anfrage zugeordneten Eingangsdaten das Programm (PR) abgearbeitet wird und die aus der Abarbeitung des Programms (PR) resultierenden Ausgangsdaten einer Antwort zugeordnet werden, die zurück an die Überwachungseinheit (WD) übermittelt wird und dort mit einer vorgegebenen Antwort verglichen wird,
wobei bei Nichtübereinstimmung der Antworten der Prüfcode (CV) durch die Überwachungseinheit (WD) so erzeugt wird, dass einer der Ausführungseinheit (EU) zugeordneten Auswerteeinheit (AU) eine fehlerbehaftete Abarbeitung des Programms (PR) angezeigt wird.

11. Sensorschaltung (SC) nach Anspruch 10 mit einer weiteren Überwachungseinheit (WD_WD), die dazu ausgebildet ist, die Überwachungseinheit (WD) zu überwachen und nur bei einem positiven Ergebnis der Überwachung einen fehlerfreien Prüfcode (CV) zu erzeugen.

12. Ausführungseinheit (EU), die mit einem Mikrocontroller (MC) einer Sensorschaltung (SC) gemäß den Ansprüchen 10 bis 11 koppelbar ist und eine Auswerteeinheit (AU) aufweist, die dazu ausgebildet ist, zu überprüfen, ob der Prüfcode (CV) logisch vordefiniert ist und/oder der Prüfcode (CV) innerhalb des vorbestimmten Zeitintervalls (T_INT) empfangen wurde, wobei die Auswerteeinheit (AU) bei einem positiven Ergebnis der Überprüfung die Nachricht (MSG) als gültig kennzeichnet und bei einem negativen Ergebnis die Nachricht (MSG) als ungültig kennzeichnet.

13. System umfassend eine Sensorschaltung gemäß Anspruch 10 und einer mit dem Mikrocontroller (MC) der Sensorschaltung (SC) verkoppelten Ausführungseinheit (EU) gemäß Anspruch 13.

## Claims

1. Method for operating a microcontroller (MC) of a sensor circuit which can be coupled to an execution unit (EU), comprising the steps of:
- reception of input data (S_1, S_2) by means of a program (PR) in the microcontroller (MC),
- production and transmission of a message (MSG) for the execution unit (EU) on the basis of the input data (S_1, S_2),
- production of a check code (CV) by means of a monitoring unit (WD) on the basis of the execution of the program (PR) in the microcontroller (MC) besides the message (MSG), and
- transmission of the check code (CV) from the microcontroller (MC) to the execution unit (EU), **characterized in that** the microcontroller (MC) comprises the monitoring unit (WD), and the execution of the program (PR) is monitored by the monitoring unit (WD) within the context of challenge/response monitoring (CR),
wherein input data associated with the challenge are used to execute the program (PR) and the output data resulting from the execution of the program (PR) are associated with a response that is transmitted back to the monitoring unit (WD) and compared therein with a prescribed response, wherein in the event of there being no match between the responses, the check code (CV) is produced by the monitoring unit (WD) such that erroneous execution of the program (PR) is indicated to an evaluation unit (AU) associated with the execution unit (EU).

2. Method according to Claim 1, wherein the evaluation unit (AU) ignores the processed input data (S_1, S_2) received by means of the message (MSG) if erroneous execution of the program (PR) is indicated.

3. Method according to one of the preceding claims, in which the message (MSG) comprises the check code (CV).

4. Method according to one of the preceding claims, in which execution of the monitoring unit (WD) is monitored and only in the event of a positive result for the monitoring is an error-free check code (CV) produced.

5. Method according to one of the preceding claims, in which the check code (CV) is produced in logically predefined fashion in the event of error-free execution of the program (PR) and is not produced in logically predefined fashion in the event of erroneous execution.

6. Method according to Claim 4, in which the check code (CV) is produced in logically predefined fashion by means of an up and/or down counter.

7. Method according to Claim 1, wherein the check code (CV) is transmitted in a predetermined time interval (T_INT).

8. Method according to one of the preceding claims, in which the microcontroller (MC) comprises a hardware monitoring unit (HW_WD) and the latter is actuated by the monitoring unit (WD) at predetermined times, wherein the microcontroller (MC) is reset by the hardware monitoring unit (HW_WD) if the predetermined time is not reached or is exceeded.

9. Method for operating an execution unit (EU) which can be coupled to a microcontroller (MC) operated according to Claim 7 or 8, in which a check is performed to determine whether the check code (CV) is logically predefined and/or the check code (CV) has been received within the predetermined time interval (T_INT), wherein the message (MSG) is flagged as valid if the result of the check is positive and the message (MSG) is flagged as invalid if the result is negative.

10. Sensor circuit (SC) having a microcontroller (MC) which can be coupled to an execution unit (EU) and is designed
- to take input data (S_1 S_2) as a basis for using a program (PR) in the microcontroller (MC) to produce and transmit a message (MSG) for the execution unit (EU),
- to produce, besides the message (MSG), a check code (CV) on the basis of the execution of the program (PR) and to transmit it from the microcontroller (MC) to the execution unit (EU),
**characterized in that** the check code (CV) is transmitted in a predetermined time interval (T_INT) and the microcontroller (MC) comprises a monitoring unit (WD), and the execution of the program (PR) can be monitored by the monitoring unit (WD) within the context of challenge/response monitoring (CR), wherein input data associated with the challenge are used to execute the program (PR), and the output data resulting from the execution of the program (PR) are associated with a response that is transmitted back to the monitoring unit (WD) and compared therein with a prescribed response,
wherein in the event of there being no match between the responses, the check code (CV) is produced by the monitoring unit (WD) such that erroneous execution of the program (PR) is indicated to an evaluation unit (AU) associated with the execution unit (EU).

11. Sensor circuit (SC) according to Claim 10 with a further monitoring unit (WD_WD) which is designed to monitor the monitoring unit (WD) and to produce an error-free check code (CV) only if the result of the monitoring is positive.

12. Execution unit (EU) which can be coupled to a microcontroller (MC) of a sensor circuit (SC) according to either of Claims 10 and 11 and has an evaluation unit (AU) which is designed to check whether the check code (CV) is logically predefined and/or the check code (CV) has been received within the predetermined time interval (T_INT), wherein the evaluation unit (AU) flags the message (MSG) as valid if the result of the check is positive and flags the message (MSG) as invalid if the result is negative.

13. System comprising a sensor circuit (SC) according to Claim 10 and an execution unit (EU), coupled to the microcontroller (MC) of the sensor circuit (SC), according to Claim 12.

## Revendications

1. Procédé d'exploitation d'un microcontrôleur (MC) d'un circuit de capteur pouvant être couplé à une unité d'exécution (EU), comprenant les étapes consistant à :
- recevoir des données d'entrée (S_1, S_2) au moyen d'un programme (PR) dans le microcontrôleur (MC),
- générer et transmettre un message (MSG) destiné à l'unité d'exécution (EU) en fonction des données d'entrée (S_1, S_2),
- générer un code de vérification (CV) au moyen d'une unité de surveillance (WD) en fonction de l'exécution du programme (PR) dans le microcontrôleur (MC) en plus du message (MSG), et
- transmettre le code de vérification (CV) du microcontrôleur (MC) à l'unité d'exécution (EU), **caractérisé en ce que** le microcontrôleur (MC) comprend l'unité de surveillance (WD) et **en ce que** l'exécution du programme (PR) est surveillée par surveillance du type question-réponse (CR) par l'unité de surveillance (WD),
dans lequel, sur la base de données d'entrée associées à la question, le programme (PR) est exécuté et les données de sortie résultant de l'exécution du programme (PR) sont associées à une réponse qui est renvoyée à l'unité de surveillance (WD) et y est comparée à une réponse prédéterminée, dans lequel, lors d'une non-concordance entre les réponses, le code de vérification (CV) est généré par l'unité de surveillance (WD) de manière à ce qu'une exécution erronée du programme (PR) soit indiquée à une unité d'évaluation (AU) associée à l'unité d'exécution (EU).

2. Procédé selon la revendication 1, dans lequel l'unité d'évaluation (AU) ignore les données d'entrée (S_1, S_2) traitées reçues au moyen du message (MSG) lorsqu'une exécution erronée du programme (PR) est indiquée.

3. Procédé selon l'une quelconque des revendications précédentes, dans lequel le message (MSG) comprend le code de vérification (CV).

4. Procédé selon l'une quelconque des revendications précédentes, dans lequel une exécution de l'unité de surveillance (WD) est surveillée et un code de vérification (CV) non erroné n'est généré que lors d'un résultat positif de la surveillance.

5. Procédé selon l'une quelconque des revendications précédentes, dans lequel le code de vérification (CV) est généré logiquement de manière prédéfinie lors d'une exécution non erronée du programme (PR) et n'est pas généré logiquement de manière prédéfinie lors d'une exécution erronée.

6. Procédé selon la revendication 4, dans lequel le code de vérification (CV) est généré logiquement de manière prédéfinie au moyen d'un compteur progressif et/ou dégressif.

7. Procédé selon la revendication 1, dans lequel le code de vérification (CV) est transmis au cours d'un intervalle de temps prédéterminé (T_INT).

8. Procédé selon l'une quelconque des revendications précédentes, dans lequel le microcontrôleur (MC) comprend une unité de surveillance matérielle (HW_WD) et celle-ci est attaquée à des instants prédéterminés par l'unité de surveillance (WD), dans lequel, lorsque l'instant prédéterminé est dépassé en sens négatif ou positif, le microcontrôleur (MC) est réinitialisé par l'unité de surveillance matérielle (HW_WD).

9. Procédé d'exploitation d'une unité d'exécution (EU) qui peut être couplée à un microcontrôleur (MC) exploitée selon la revendication 7 ou 8, dans lequel il est vérifié si le code de vérification (CV) est logiquement prédéfini et/ou si le code de vérification (CV) a été reçu au cours d'un intervalle de temps prédéterminé (T_INT), dans lequel, lors d'un résultat positif de la vérification, le message (MSG) est caractérisé comme étant valide et lors d'un résultat négatif, le message (MSG) est caractérisé comme étant invalide.

10. Circuit de capteur (SC) comportant un microcontrôleur (MC) pouvant être couplé à une unité d'exécution (EU) et qui est conçu pour :
- générer et transmettre un message (MSG) destiné à l'unité d'exécution (EU) au moyen d'un programme (PR) dans le microcontrôleur (MC) en fonction de données d'entrée (S_1, S_2),
- générer, en plus du message (MSG), un code de vérification (CV) en fonction de l'exécution du programme (PR) et le transmettre du microcontrôleur (MC) à l'unité d'exécution (EU),
**caractérisé en ce que** le code de vérification (CV) est transmis au cours d'un intervalle de temps (T_INT) et le microcontrôleur (MC) comprend une unité de surveillance (WD) et l'exécution du programme (PR) est surveillée par l'unité de surveillance (WD) par une surveillance du type question-réponse (CR), dans lequel, sur la base des données d'entrée associées à la question, le programme (PR) est exécuté et les données de sortie résultant de l'exécution du programme (PR) sont associées à une réponse qui est renvoyée à l'unité de surveillance (WD) et y est comparée à une réponse prédéterminée,
dans lequel, lors d'une non-concordance entre les réponses, le code de vérification (CV) est généré par l'unité de surveillance (WD) de manière à ce qu'une exécution erronée du programme (PR) soit indiquée à une unité d'évaluation (AU) associée à l'unité d'exécution (EU).

11. Circuit de capteur (SC) selon la revendication 10, comportant une autre unité de surveillance (WD_WD) qui est conçue pour surveiller l'unité de surveillance (WD) et pour ne générer un code de vérification (CV) non erroné que lors d'un résultat positif de la surveillance.

12. Unité d'exécution (EU) pouvant être couplée à un microcontrôleur (MC) d'un circuit de capteur (SC) selon les revendications 10 à 11 et comprenant une unité d'évaluation (AU) qui est conçue pour vérifier si le code de vérification (CV) est logiquement prédéfini et/ou si le code de vérification (CV) a été reçu au cours de l'intervalle de temps prédéterminé (T_INT), dans laquelle l'unité d'évaluation (AU) caractérise le message (MSG) comme étant valide lors d'un résultat positif de la surveillance et caractérise le message (MSG) comme étant invalide lors d'un résultat négatif.

13. Système comprenant un circuit de capteur selon la revendication 10 et une unité d'exécution (EU) selon la revendication 12, couplée au microcontrôleur (MC) du circuit de capteur (SC).
